(19) Europäisches Patentamt
European Patent Office
Office européen des brevets

(11) Veröffentlichungsnummer: **0 137 139**
**B1**

# (12) EUROPÄISCHE PATENTSCHRIFT

(45) Veröffentlichungstag der Patentschrift: **18.03.87**

(51) Int. Cl.⁴: **C 08 G 65/46**

(21) Anmeldenummer: **84108106.0**

(22) Anmeldetag: **11.07.84**

(54) **Verfahren zur Reinigung von Polyphenylenoxiden, die nach Abstoppung der kupferaminkatalysierten Polykondensation von diorthosubstituierten Phenolen erhalten werden.**

(30) Priorität: **08.09.83 DE 3332377**

(43) Veröffentlichungstag der Anmeldung:
**17.04.85 Patentblatt 85/16**

(45) Bekanntmachung des Hinweises auf die Patenterteilung:
**18.03.87 Patentblatt 87/12**

(84) Benannte Vertragsstaaten:
**AT BE DE FR GB IT NL SE**

(56) Entgegenhaltungen:
**EP-A-0 098 929**
**DE-A-2 246 552**
**DE-A-2 364 319**
**DE-A-2 640 147**
**DE-A-2 755 937**
**US-A-4 263 426**

**Patent Abstracts of Japan Band 4, Nr. 173, 29. November 1980, page (C-32) 655**

***Die Akte enthält technische Angaben, die nach dem Eingang der Anmeldung eingereicht wurden und die nicht in dieser Patentschrift enthalten sind.***

(73) Patentinhaber: **HÜLS AKTIENGESELLSCHAFT, Patentabteilung / PB 15 - Postfach 13 20, D-4370 Marl 1 (DE)**

(72) Erfinder: **Bartmann, Martin, Dr., Burgstrasse 35, D-4350 Recklinghausen (DE)**
Erfinder: **Bax, Hanns- Jörg Dr., Lipper Weg 193, D-4370 Marl (DE)**
Erfinder: **Burzin, Klaus, Dr., Wellerfeldweg 164, D-4370 Marl (DE)**
Erfinder: **Ribbing, Wilfried, Dr., Heesternweg 20, D-4270 Dorsten 12 (DE)**
Erfinder: **Sridhar, Srinivasan, Dr., Lehmbecker Pfad 52, D-4370 Marl (DE)**

**EP 0 137 139 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Polyphenylenoxide und Verfahren zu ihrer Herstellung sind bekannt. Sie werden z. B. in Bühler "Spezialplaste" (Akademieverlag, Berlin, 1978) sowie in den US-PSS 3 306 874 und 3 306 875 beschrieben.

Im industriellen Bereich haben sich die Verfahren durchgesetzt, bei denen diorthosubstituierte Phenole in Gegenwart von Sauerstoff bzw. Sauerstoff enthaltenden Gasmischungen durch Kupferamin-Komplexe oxidativ gekuppelt werden. Vom Ende der Reaktion bis zum Erhalt des pulverförmigen Endproduktes sind drei Verfahrensschritte, nämlich das Abstoppen der polykondensation, die Reinigung des Polymeren und die Isolierung des PPO erforderlich.

Das Abstoppen der Polykondensation kann - abhängig von den jeweiligen Reaktionsbedingungen - zweckmäßigerweise entweder durch Inaktivierung des Katalysatore, durch Abtrennen des Katalysators oder durch Abtrennen des Polymeren erfolgen. In einzelnen Fällen bewirken diese Maßnahmen neben der Beendigung der Polykondensation eine wenn auch unvollständige Reinigung des Polymeren.

Die wichtigsten Methoden sind folgende:

1. Zugabe von wäßrigen Säuren
2. Zugabe von Laugen
3. Zugabe von Komplexbildnern für Kupferionen
4. Zugabe von polaren Lösungsmitteln zur Abtrennung des Polymeren

Die Zugabe wäßriger Säurelösungen dürfte das im häufigsten angewandte Verfahren zum Abstoppen der Polykondensation sein, obwohl der Verbrauch an Säure erheblich und die Abtrennung des Amins unbefriedigend ist (vgl. DE-OS 22 46 552, Seite 4, Zeilen 1 bis 8). Das Arbeiten in einer Extraktionsapparatur, beispielsweise im Gegenstrom zu einem wäßrigen Säurestrom und gegebenenfalls bei erhöhter Temperatur (DE-OS 21 05 372), stellt zwar verfahrensmäßig eine Verbesserung dar, erfordert aber gleichfalls erhebliche Mengen Alkalimetallhydroxide, um die Amine zurückzugewinnen.

Nach dem Verfahren der DE-OS 22 46 552 wird der PPO-Reaktionsansatz, der den Kupferamin-Katalysator und das Polymere in einem aromatischen Lösemittel enthält, durch Behandlung mit $CO_2$/Wasser abgestoppt und aufgearbeitet. Die Abtrennung des Amins vom Polymeren ist indessen unbefriedigend, wie Beispiel A zeigt.

In der DE-PS 15 70 683 wird beschrieben, daß dem PPO-Reaktionsansatz 50 %ige Natriumhydroxidlösung zugesetzt wird. Dieses Verfahren hat sich nicht durchsetzen können, da es nicht zuverlßssig die Polymerisation abbricht (vgl. DE-PS 24 30 130).

Mit Hilfe von Chelatisierungsmitteln kann der Katalysator inaktiviert und eine Abtrennung des Kupfers erreicht werden (vgl. DE-PS 15 70 683, Spalte 15, Zeilen 3 bis 5, und DE-OS 26 40 147). Experimentelle Einzelheiten sind ferner der DE-OS 23 64 319 zu entnehmen.

Diese Offenlegungsschstift beschreibt ein Verfahren bei dem nach der Entfernung des metallischen Katalysator-Rückstandes die Reaktionslösung einer flüssig-flüssig-Extraktion mit einem wäßrigen Medium unterworfen wird. Bei diesem Verfahren wird nur der metallische Katalysator entfernt. Das Amin soll dagegen in der organischen Phase verbleiben, da es das Polymere gegen einen Molekulargewichtsverlust schützt (vgl. Seite 2, Abs. 4, Seite 3, Zeile 10). Die Schrift gibt keine Anregungen, wie das bei der oxidativen Kupplungsreaktion als Nebenprodukt entstehende 3,3'5,5-Tetramethyl-4,4'-diphenochinon (im folgenden "Diphenochinon" genannt) abgetrennt werden kann.

Der wesentliche Nachteil aller Verfahren, die mit Chelatisierungsmitteln arbeiten, ist der beobachtete Abbau des Polymeren. Es wurde festgestellt (vgl. DE-OS 27 54 887), daß Polyphenylenoxide um so schneller abgebaut werden, je höher die Temperatur ist, der sie unterworfen sind, und je mehr Zeit zwischen dem Ende der Reaktion und der Isolierung des Polymeren verstreicht. Beispielsweise nimmt der Viskositätsindex, der ein Maß für des mittlere Molekulargewicht der Polymereinheiten darstellt, bei einer Temperatur von 50 °C üblicherweise um mehr als 0,1, nicht selten sogar um 0,2 dl/g pro Stunde ab (DE-OS 27 54 887).

Auch durch den Einsatz spezieller Chelatisierungsmittel, z. B. der Polyamine in dem Verfahren der DE-OS 24 60 323, läßt sich dieser Abbau nicht vermeiden.

Es wurde vorgeschlagen, den Polymerlösungen neben dem Chelatisierungsmittel weitere Stabilisierungsmittel, wie z. B. zweiwertige Phenole und Reduktionsmittel (vgl. DE-OS 27 54 887) oder aromatische Amine (vgl. DE-OS 27 55 937), zuzusetzen. Diese Lösungen vermögen indessen nicht zu befriedigen, da man die Zusatzstoffe in teilweise beträchtlichen Konzentrationen benötigt. Außerdem wird die Isolierung der Polyphenylenoxide dadurch zusätzlich erschwert.

Mit Hilfe von Alkoholen, Ketonen oder deren wäßrigen Lösungen, sogenannten "Antilösemitteln", kann die PPO-Polykondensation gestoppt und das Polymer ausgefällt werden, während Katalysatorreste und Diphenochinon im Lösemittel zurückbleiben. Doch können bereits geringe Mengen Kupfer, die beim Polymeren verbleiben, dessen Farbqualität negativ beeinflussen und einen Abbau katalysieren (vgl. DE-OS 26 16 746).

Alle Fällungsverfahren (siehe z. B. DE-PSS 12 65 410, 15 70 683 und DE-OSS 25 32 477, 25 32 478, 26 55 161 und 27 52 867) ist gemeinsam, daß erhebliche Mengen an Lösemitteln eingesetzt, aufgearbeitet und redestilliert werden müssen. Man zieht es daher in der Praxis vor, die Polymeren nach einem sogenannten Direktisolationsverfahren zu gewinnen, beispielsweise durch Dampfabscheidung, Sprühtrocknung oder Heißwasserzerkrümelung. Für die Anwendung dieser Verfahren ist aber Voraussetzung, daß die Reste des Kupferaminkatalysators und andere Verunreinigungen vorher möglichst quantitativ abgetrennt werden müssen (vgl. DE-OS 24 60 323).

Es gibt schließlich eine Reihe von Verfahren zur Verbesserung der Farbqualität von Polyphenylenoxiden, bei denen Reduktionsmittel eingesetzt werden. So lehrt z.B. die DE-PS 24 30 130 die Verwendung eines 2wertigen Phenols oder eines Benzochinons und eines milden Reduktionsmittels. Ungünstig ist der hohe Mengenbedarf an biologisch schwer abbaubaren 2wertigen Phenolen und die mit großem zeitlichen Aufwand verbundene Trennung des Reaktionsgemisches von der zugesetzten wäßrigen Lösung. Diese Verfahren haben sich daher auch nicht durchsetzen können.

Ziel der vorliegenden Anmeldung war es demnach, ein verbessertes Verfahren zur Reinigung von Polyphenylenoxiden zu finden, mit dem das lästige Diphenochinon entfernt werden kann.

Ein weiteres Ziel der vorliegenden Anmeldung bestand darin, auch die Reste des Kupferamin-Katalysatore soweit abzutrennen, daß die erhaltene PPO-Lösung unmittelbar einem sogenannten Direktisolationaverfahren unterworfen werden kann.

Es wurde jetzt überraschend gefunden, daß man den Diphenochinongehalt deutlich reduzieren kann, wenn die nach Abstoppung der kupferaminkatalysierten Polykondensation von diorthosubstituierten Phenolen erhaltenen Polyphenylenoxide mit einem wäßrigen Medium einer flüssig-flüssig-Extraktion bei einem Volumenverhältnis der organischen Reaktionsphase zur wäßrigen Phase zwischen 1 : 10 und 10 : 1 unterworfen werden, wobei man die Reaktionsmischung bei einer Temperatur von 60 bis 150 °C einer Reaktionsextraktion mit Wasser oder Wasserdampf unterwirft. Gleichzeitig wird in der wäßrigen Phase keine Anreicherung des Diphenochinons beobachtet. Offenbar wird die Extraktion von einer chemischen Reaktion begleitet, wofür wir den Begriff "Reaktionsextraktion" gewählt haben.

Eine bevorzugte Ausführung des erfindungsgemäßen Verfahrens besteht darin, die Reaktionsextraktion in Gegenwert eines Alkanolamins durchzuführen. Auf diese Weise ist es möglich, PPO-Lösungen zu erhalten die nach einem Direktisolationsverfaren aufgeabeitet werden können.

Es gibt verschiedene Möglichkeiten, von dem erfindungsgemäßen Verfahren Gebrauch zu machen. Beispielsweise kann man Wasserdampf in die Reaktionsmischung einleiten. Man kann aber auch der Reaktionsmischung heißes Wasser zusetsen. Der Druckbereich, ist nicht kritisch. Man kann beispielsweise bei leichtem Überdruck oder vorzugsweise bei Normaldruck arbeiten.

Wesentlich ist, daß die Reaktionsmischung, im Kontakt mit einer wäßrigen Phase, die gegebenenfalls bis zu 2 Gewichtsprozent eines Alkanolamins mit bis zu 12 C-Atomen, vorzugsweise des Triethanolamins, enthält, bei einer Temperatur von 60 bis 150 °C gehalten wird. Das Volumenverhältnis der organischen Reaktionsphase zur wäßrigen Phase liegt zwischen 10 : 1 und 1 : 10, vorzugsweise zwischen 5 : 1 und 1 : 1. Nach einer bevorzugten Fahrweise setzt man der Reaktionsmischung die, angegebene Menge Wasser zu, erwärmt das Gemisch in einer Extraktionskolonne auf 70 bis 90 °C und hält es über einen Zeitraum von 10 bis 100 Minuten bei dieser Temperatur. Anschließend werden beide Phase problemlos getrennt.

Im Prinzip können alle nach bekannten Verfahren abgestoppten Reaktionsmischungen kupferaminkatalysierter Polykondensationen in der beschriebenen Weise gereinigt werden. Besonders geeignet sind jedoch die Reaktionsansätze, die durch Zusatz von wäßrigen Säuren oder Komplexbildnern abgestoppt, werden. Eine besonders elegante Variante soll im folgenden beschrieben werden:

Danach geht man von einem PPO-Ansatz aus, bei dem ein diorthosubstituiertes Phenol, vorzugsweise 2,6-Dimethylphenol, in Gegenwart eines Katalysators aus einem Kupfer-II-salz, Morpholin und gegebenenfalls weiteren Aktivatoren in einem Lösemittelgemisch aus einem aromatischen Kohlenwasserstoff mit 6 bis 8 C-Atomen und einem aliphatischen Alkohol mit 1 bis 4 C-Atomen, vorzugsweise Toluol/Methanol, im Volumenverhältnis 92,5 : 7,5 bis 50 : 50 mit der Einschränkung polymerisiert wird, daß kein Polymeres ausfallen soll.

Ein solches Verfahren wird beispielsweise in der DE-OS 33 13 864 beschrieben. Es wurde überraschend gefunden, daß auf diese Weise der Extraktionsgrad des Amine von ca. 80 % (DE-OS 22 46 552, Seite 10, Zeilen 8 bis 10) auf 98 % gesteigert werden konnte. Gleichzeitig ist eine auf diese Weise erhaltene Reaktionslösung unmittelbar der nachfolgenden Reaktionsextraktion zugänglich.

Auch die wäßrige Phase, die bei der Abstoppung mit $CO_2$ eingesetzt wird, kann bis zu 2 Gewichtsprozent, vorzugsweise des gleichen Alkanolamins, enthalten, das später mit Vorteil bei der Reaktionsextraktion verwendet wird, nämlich eine aliphatische Verbindung mit bis zu 12 C-Atomen, die wenigstens eine Hydroxyl- und eine Aminofunktion enthält und vorzugsweise Triethanolamin ist.

Bricht man die Polykondensation dadurch ab, daß man die Reaktionsmischung mit $CO_2$ und Wasser behandelt, so beobachtet man bei Anwendung der Reaktionsextraktion einen Rückgang des Chinongehaltes in der Polymerlösung, der mit einem Rückgang des Molekulargewichtes des Polymeren verbunden ist. Der Fachmann hätte erwartet (vgl. J. Polymer Science, Polymer Chemistry Edition, Vol. 19, 1367 (1981), daß die Chinone in der Wärme mit dem Polymeren reagieren und dementsprechend das Molekulargewicht ansteigt. Es wurde jetzt gefunden, daß es vorteilhaft ist, in diesen Fällen die Reaktionsextraktion in Gegenwart eines Stabilisatore durchzuführen.

Geeignete Stabilisatoren umfassen

1. hypophosphorige Säure und ihre Salze,

2. Alkali- und Erdalkalidithionite,

3. aliphatische und aromatische Mercaptane mit 1 bis 10 C-atomen, die gegebenenfalls durch Hydroxyl- und Aminogruppen substituiert sein können, wie z. B. Mercaptoethanol und Thiophenol,

4. Hydrazinderivate der Formel

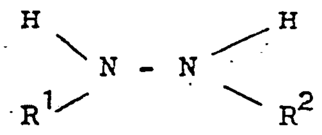

,

wobei $R^1$ und $R^2$ unabhängig voneinander für Wasserstoff, den Phenylrest oder einen Acylrest mit bis zu 6 C-Atomen stehen können,

6. 2,6-Di-tert.-butylphenole der Formel

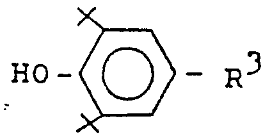

wobei $R^3$ für Methyl, Ethyl, oder den Rest $-CH_2-CH_2-COOR^4$ steht und $R^4$ ein gegebenenfalls hydroxylgruppenhaltiger Alkylrest mit bis zu 8 C-Atomen ist, der mit weiteren Di-tert.-butylphenolen verestert sein kann (vgl. Beispiel 9). Die Butylphenole werden bevorzugt eingesetzt.

Das erfindungsgemäße Verfahren und die aufgeführte Kombination einer schonenden und trotzdem effektiven Abstoppung mit einer nachfolgenden Reaktionsextraktion ist den bekannten Verfahrensausführen nach dem Stand der Technik überlegen:

1. Es entfällt die Notwendigkeit, größere Mengen polarer Lösemittel zu redestillieren.
2. Die Aufarbeitung der Amincarbonate ist überaus einfach
3. Es treten keine langwierigen Phasentrennprobleme auf.
4. Die erhaltenen Polyphenylenoxidlösungen können nach einem Direktisolationsverfahren aufgearbeitet werden. Das Polymere, das beispielsweise durch Sprühtrocknung erhalten wird, enthält in der Regel weniger als 10 ppm Kupfer, 100 ppm Chinon und 100 ppm Aminstickstoff. Es ist farblos und unter den Verarbeitungsbedingungen stabil.

Selbstverständlich kann die erhaltene Polyphenylenoxidlösung auch durch Zugabe eines polaren Lösemittels, wie z. B. Methanol, aufgearbeitet werden. Entscheidet man sich für diese an sich aufwendigere Route, so kann der Chinon-Gehalt noch weiter reduziert werden (s. Beispiel 2).

Das nach dem vorliegenden Verfahren erhältliche Polyphenylenoxid findet entweder als solches oder als Copolymer in Polyblends zur Herstellung besonders wärmestabiler Formteile Verwendung.

**Beispiel 1**

Man löst 3 g $CuCl_2 \cdot 2H_2O$ und 7,5 g Morpholiniumbromid in 30 g Morpholin und vermischt diese Lösung in einem 3 l-Rührreaktor mit 1 300 g Toluol und 207 g Methanol. Anschließend gibt man 30 g einer 50 %igen Lösung von 2,6-Dimethylphenol in Toluol hinzu und startet die Polykondensation unter Rühren (750 U/min) durch Einleiten eines Luftstroms von 200 l/h. Nach 10 Minuten tropft man weitere 270 g der Dimethylphenol-Lösung über einen Zeitraum von 30 Minuten zu. Die Temperatur der Reaktionsmischung wird zwischen 30 und 35 °C gehalten. 60 Minuten nach Beendigung der Dimethylphenolzugabe stoppt man die Polykondensation durch Zugabe von 425 ml $H_2O$, 2 g Triethanolamin und Einleiten von $CO_2$ (200 l/h), bis die exotherme Reaktion abgeklungen ist. Anschließend trennt man die Phasen und kocht die isolierte organische Phase mit 425 ml Wasser und 2 g Triethanolamin 30 Minuten unter Rückfluß. Nach erneuter Phasentrennung isoliert man das Polyphenylenoxid durch Sprühtrocknen.

J = 55 ml/g
Kupfergehalt = < 5 ppm
Chinongehalt = < 100 ppm
Farbe = weiß

**Beispiel 2**

Wie Beispiel 1, jedoch wird das Polymere nicht sprühgetrocknet, sondern durch Zugabe von 1 300 g Methanol zu der nach der Reaktionsextraktion isolierten organischen Phase gefällt.

J = 57 ml/g
Kupfergehalt = < 5 ppm
Chinongehalt = < 20 ppm
Farbe = weiß

**Beispiel 3**

Wie Beispiel 1, jedoch führt mhn die Reaktionsextraktion in einem gerührten Autoklaven bei 120°C durch, wobei ein Druckaufbau von 3 bar beobachtet wird.

J = 52 ml/g
Kupfergehalt = 5 ppm
Chinongehalt = 100 ppm
Farbe = weiß

**Beispiel 4**

Wie Beispiel 1, jedoch erfolgt der Abbruch der Polykondensation mit $CO_2$ und $H_2O$ ohne Zugabe von Triethanolamin.

J = 55 ml/g.
Kupfergehalt = 10 ppm
Chinongehalt = 100 ppm
Farbe = weiß

**Beispiel 5**

Wie Beispiel 1, jedoch unter Verwendung von 2 g Diethanolamin anstelle des Triethanolamins bei der Reaktionsextraktion.

J = 55 ml/g
Kupfergehalt = 7 ppm
Chinongehalt = 100 ppm
Farbe = weiß

**Beispiel 6**

Wie Beispiel 1, jedoch stoppt man die Polykondensation bereits 45 Minuten nach der letzten Dimethylphenolzugabe ab. Zu der danach isolierten Polymerlösung gibt man 3 g 2,6-Di-tert.-butyl-p-kresol und führt anschließend, wie in Beispiel 1 beschrieben, die Reaktionsextraktion durch. Den Polyphenylenether isoliert man schließlich durch Zugabe von 1 300 g Methanol.

J = 55 ml/g
Kupfergehalt = <5 ppm
Chinongehalt = <100 ppm
Farbe = weiß

**Beispiel 7**

Wie Beispiel 1, jedoch stoppt man die Polykondensation 45 Minuten nach der letzten Zugabe von 2,6-Dimethylphenol durch Zusatz von 200 g 50 %iger Essigsäure. Nach Phasentrennung gibt man zu der isolierten Polymerlösung 3 g 2,6-Di-tert.-butyl-p-kresol und führt anschließend, wie in Beispiel 1 beschrieben, die Reaktionsextraktion durch. Den Polyphenylenether isoliert man schließlich durch Zugabe von 1 300 g Methanol.

J = 55 ml/g
Kupfergehalt = < 5 ppm
Chinongehalt = < 100 ppm
Farbe = weiß

**Beispiel 8**

Wie Beispiel 6, jedoch mit 3 g hypophosphorige Säure anstelle des Di-tert.-butylkresols.

J = 53 ml/g
Kupfergehalt = <5 ppm
Chinongehalt = <100 ppm

Farbe = weiß

**Beispiel 9**

Wie Beispiel 6, jedoch setzt man 3 g des Esters aus vier Äquivalenten der β-(3,5-Di-tert.-butyl-4-hydroxyphenyl)-propionsäure mit Pentaerythrit (IRGANOX® 1010 der Fa. Ciba-Geigy) anstelle von Di-tert.-butylkresol ein.
J = 55 ml/g
Kupfergehalt = <5 ppm
Chinongehalt = <100 ppm
Farbe = weiß

**Beispiel 10**

Wie Beispiel 6 mit 3 g 2,4-Dichlor-5-methylthiophenol.
J = 52 ml/g
Kupfergehalt = <5 ppm
Chinongehalt = <100 ppm
Farbe = weiß

**Beispiel 11**

Wie Beispiel 6 mit 3 g Mercaptoethanol.
J = 55 ml/g
Kupfergehalt = < 5 ppm
Chinongehalt = <100 ppm
Farbe = weiß

**Beispiel 12**

Wie Beispiel 1, jedoch ohne Zusatz von Triethanolamin bei der Reaktionsextraktion.
J = 55 ml/g
Kupfergehalt = 25 ppm
Chinongehalt = 100 ppm
Farbe = weiß

**Vergleichsbeispiel A**

Wie Beispiel 1, jedoch wurde die Reaktionsextraktion ausgelassen.
J = 69 ml/g
Kupfergehalt = 50 ppm
Chinongehalt = 0, 1 %
Farbe = gelblich

**Vergleichsbeispiel B**

Wie Beispiel 1, jedoch wird dis Reaktionsextraktion bei 30 °C durchgeführt. Die Phasentrennung (PPO-Toluol/$H_2O$-Triethanolamin) ist nur durch Verwendung eines vergrößerten Schwerkraftfeldes zu erreichen (Zentrifuge: 5 000 U/min).
J = 69 ml/g
Kupfergehalt = 5 ppm
Chinongehalt = ca. 0,1 %
Farbe = gelblich

Der in den Beispielen angegebene J-Wert wurde analog zur DIM 53 728, d. h. mit Hilfe der Gleichung $J = \left(\frac{\eta}{\eta_0} - 1\right)\frac{1}{c}$ bestimmt.

$\eta$ - dynamische Viskosität einer 0,5 %igen Lösung, die man durch auflösen des Reaktionsproduktes in Chloroform bei 25 °C erhält

$\eta_0$ - dynamische Viskosität von Chloroform bei 25 °C

c - Konzentration des Reaktionsproduktes in Chloroform in g/ml

**Patentansprüche**

1. Verfahren zur Reinigung von Polyphenylenoxiden, die nach Abstoppung der kupferaminkatalysierten Polykondensation von diorthosubstituierten Phenolen erhalten werden und die mit einem wäßrigen Medium einer flüssig-flüssig-Extraktion unterworfen werden, wobei das Volumenverhältnis der organischen Reaktionsphase zur wäßrigen Phase zwischen 1 : 10 und 10 : 1 liegt,
dadurch gekennzeichnet,
daß man die Reaktionsmischung bei einer Temperatur von 60 bis 150 °C einer Reaktionsextraktion mit Wasser oder Wasserdampf unterwirft.

2. Verfahren nach Anspruch 1, dadurch gekennzeichnet,
daß man die Reaktionsextraktion bei einer Temperatur von 70 bis 90 °C durchführt.

3. Verfahren nach Anspruch 1 oder 2, dadurch gekennzeichnet,
daß die wäßrige Phase zusätzlich bis zu 2 Gewichtsprozent eines Alkanolamine mit bis zu 12 C-atomen enthält.

4. Verfahren nach Anspruch 3, dadurch gekennzeichnet,
daß man als Alkanolamin Triethanolamin einsetzt.

5. Verfahren nach den Ansprüchen 1 bis 4, dadurch gekennzeichnet,
daß man die Reaktionsextraktion in Gegenwart eines Stabilisators durchführt, der einer der folgenden Verbindungsklassen angehört:

1. hypophosphorige Säure und ihre Salze,
2. Alkali- und Erdalkalidithionite,
3. aliphatische und aromatische Mercaptane mit 1 bis 10 C-Atomen, die gegebenenfalls durch Hydroxyl- und Aminogruppen substituiert sein können, z. B. Mercaptoethanol und Thiophenol,
4. Hydrazinderivats der Formel

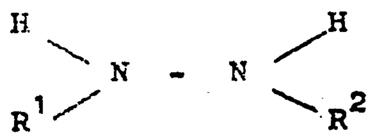,

wobei $R^1$ und $R^2$ unabhängig voneinander für Wasserstoff, den Phenylrest oder einen Acylrest mit bis zu 6 C-atomen stehen können und

5. 2,6-Di-tert.-butylphenole der Formel

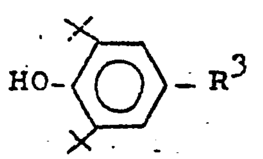,

wobei $R^3$ für Methyl, Ethyl oder den Rest $-CH_2-CH_2-COOR^4$ steht und $R^4$ ein gegebenenfalls hydroxylgruppenhaltiger Alkylrest mit bis zu 8 C-Atomen ist, der mit weiteren Di-tert.-butylphenolen verestert sein kann.

6. Verfahren nach Anspruch 5, dadurch gekennzeichnet,
daß man ein 2,6-Di-tert.-butylphenol gemäß 5. einsetzt.

7. Verfahren nach den Ansprüchen 1 bis 6, dadurch gekennzeichnet,
daß man von einer Reaktionsmischung ausgeht,
7.1 die als Aminbestandteil des Katalysators Morpholin enthält,
7.2 bei der als Lösemittel ein Gemisch aus einem aromatischen Kohlenwasserstoff mit 6 bis 8 C-Atomen und einem aliphatischen Alkohol mit 1 bis 4 C-Atomen, vorzugsweise Toluol und Methanol, im Volumenverhältnis 92,5 : 7,5 bis 50 : 50 verwendet wird und
7.3 wobei man die Reaktion durch Behandlung mit Wasser und Kohlendioxid stoppt.

8. Verfahren nach Anspruch 7, dadurch gekennzeichnet,
daß man zum Abstoppen der Reaktion eine Lösung verwendet, die zusätzlich in Mengen bis zu 2 Gewichtsprozent ein Alkanolamin mit bis zu 12 C-Atomen, insbesondere Triethanolamin, enthält.

9. Verfahren nach den Ansprüchen 1 bis 8, dadurch gekennzeichnet, daß man als diorthosubstituiertes Phenol 2, 6-Dimethylphenol einsetzt.

**Claims**

1. A process for purifying a polyphenylene oxide which is obtained after termination of the polycondensation of a diortho-substituted phenol using a copper/amine catalyst and which is subjected to a liquid-liquid extraction using an aqueous medium, the ratio of the organic reaction phase to the aqueous phase being from 1:10 to 10:1 by volume, characterised in that the reaction mixture is subjected to a reactive extraction at a temperature of 60 to 150° C with water or steam.

2. A process according to claim 1, characterised in that the reactive extraction is carried out at a temperature of 70 to 90° C.

3. A process according to claim 1 or 2, characterised in that the aqueous phase additionally contains up to 2% by weight of an alkanolamine of up to 12 carbon atoms.

4. A process according to claim 3, characterised in that triethanolamine is added as the alkanolamine.

5. A process according to any of claims 1 to 4, characterised in that the reactive extraction is carried out in the presence of a stabiliser which belongs to one of the following classes of compounds:

1) hypophosphorous acid and its salts;

2) alkali metal and alkaline earth metal dithionites;

3) aliphatic and aromatic mercaptans of 1 to 10 carbon atoms, optionally substituted by one or more hydroxy or amine groups, e.g. mercaptoethanol or thio-phenol;

4) hydrazine derivatives of the formula

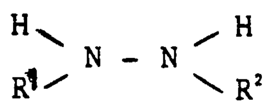

where $R^1$ and $R^2$ independently of one another are hydrogen, phenyl or acyl of up to 6 carbon atoms; and

5) 2,6-ditert. butylphenols of the formula

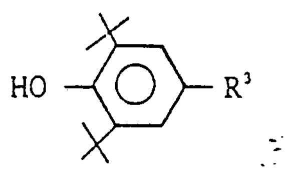

where $R^3$ is methyl, ethyl or $-CH_2-CH_2-COOR^4$, $R^4$ being an alkyl radical of up to 8 carbon atoms optionally containing one or more hydroxy groups, which can be esterified with additional di-tert. butylphenol.

6. A process according to claim 5, characterised in that a 2,6-di-tert.butylphenol according to 5) is added.

7. A process according to any of claims 1 to 6, characterised in that the starting point is a reaction mixture

7.1) which contains morpholine as the amine component of the catalyst,

7.2) with which a mixture of an aromatic hydrocarbon of 6 to 8 carbon atoms and an aliphatic alcohol of 1 to 4 carbon atoms, preferably toluene and methanol, in a ratio of from 92.5:7.5 to 50:50 by volume is used as solvent, and

7.3) the reaction is terminated by treatment with water and carbon dioxide.

8. A process according to claim 7, characterised in that a solution which additionally contains an alkanolamine of up to 12 carbon atoms especially triethanolamine, in an amount up to 2% by weight is used for terminating the reaction.

9. A process according to any of claims 1 to 8 characterised in that 2,6-dimethylphenol is added as the diortho-substituted phenol.

**Revendications**

1. Procédé de purification d'oxydes de polyphénylène qui sont obtenus après arrêt de la polycondensation (catalysée avec une cuivre-amine) de phénols ortho-disubstitués et qui sont soumis avec un milieu aqueux à une extraction liquide-liquide, le rapport volumétrique entre la phase réactionnelle organique et la phase aqueuse étant compris entre 1:10 et 10:1,

caractérisé par le fait que l'on soumet le mélange réactionnel, à une température de 60 à 150°C, à une extraction de réaction avec de l'eau ou de la vapeur d'eau.

2. Procédé selon la revendication 1, caractérisé par le fait que l'on effectue l'extraction de réaction à une température de 70 à 90°C.

3. Procédé selon la revendication 1 ou 2, caractérisé par le fait que la phase aqueuse renferme complementairement jusqu'à 2 % en poids d'une alcanolamine contenant jusqu'à 12 atomes de carbone.

4. Procédé selon la revendication 3, caractérisé par le fait qu'on utilise, comme alcanolamine, la triéthanolamine.

5. Procédé selon les revendications 1 à 4, caractérisé par le fait que l'extraction de réaction est effectuée en présence d'un stabilisant appartenant à l'une des classes suivantes de composés:

1. l'acide hypophosphoreux et ses sels,

2. les dithionites alacalins et alcalino-terreux,

3. des mercaptans aliphatiques et aromatiques comportant de un à 10 atomes de carbone et pouvant éventuellement être substitués par des groupes hydroxyle et par des groupes amine, par exemple le mercapto-éthanol et le thio-phenol,

4. des dérivés de l'hydrazine de formule

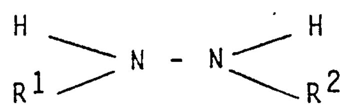
,

dans laquelle $R^1$ et $R^2$, indépendamment l'un de l'autre, peuvent représenter de l'hydrogène, le radical phényle ou un radical acyle comportant jusqu'à 6 atomes de carbone,

et

5. des 2,6-di-tertio-butyl-phénols de formule

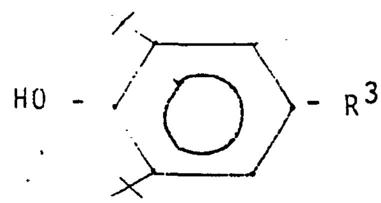
,

dans laquelle $R^3$ représente un radical méthyle, éthyle, ou le reste de formule

$-CH_2-CH_2-COOR^4$,

dans laquelle $R^4$ représente un radical alkyle qui est éventuellement substitué par des groupes hydroxyle, comporte jusqu'à 8 atomes de carbone et peut être estérifié par d'autres di-tertio-butyl-phénols.

6. Procédé selon la revendication 5, caractérisé par le fait que l'on utilise un 2,6-di-tertio-butyl-phénol selon la revendication 5.

7. Procédé selon les revendications 1 à 6, caractérisé par le fait que l'on part d'un mélange réactionnel

7.1 qui renferme de la morpholine en tant que composant amine du catalyseur,

7.2 dans lequel on utilise comme solvant un mélange obtenu à partir d'un hydrocarbure aromatique comportant de 6 à 8 atomes de carbone et à partir d'un alcool aliphatique comportant de 1 à 4 atomes de carbone, de préférence le toluène et le méthanol, ce dans une proportion volumétrique de 92,5 : 7,5 à 50 : 50,

et

7.3 que l'on arrête la réaction par traitement avec de l'eau et du dioxyde de carbone.

8. Procédé selon la revendication 7, caractérisé par le fait que pour arrêter la réaction, on utilise une solution qui renferme complémentairement une alcanolamine comportant jusqu'à 12 atomes de carbone, en particulier la triéthanolamine, dans des quantités allant jusqu'à 2 % en poids.

9. Procédé selon les revendications 1 à 8, caractérisé par le fait que l'on utilise, en tant que phénol ortho-disubstitué, le 2,6-diméthyl-phénol.